Europäisches Patentamt

European Patent Office

Office européen des brevets

(19)

(11) Publication number: **0 006 720**
**B1**

(12) **EUROPEAN PATENT SPECIFICATION**

(45) Date of publication of patent specification: **12.05.82**

(51) Int. Cl.³: **B 23 K  15/00**

(21) Application number: **79301146.1**

(22) Date of filing: **14.06.79**

(54) Apparatus for electron beam welding.

(30) Priority: **16.06.78 JP  72131/78**

(43) Date of publication of application:
**09.01.80 Bulletin 80/1**

(45) Publication of the grant of the patent:
**12.05.82 Bulletin 82/19**

(84) Designated Contracting States:
**DE FR GB**

(56) References cited:
**DE - A - 2 214 159**
**DE - B - 1 565 029**
**DE - B - 2 211 597**

**Japanese Laid Open Patent Application**
**No. 50 129 445 (1975)**

(73) Proprietor: **Hitachi, Ltd.**
**5-1, Marunouchi 1-chome**
**Chiyoda-ku Tokyo 100 (JP)**

(72) Inventor: **Nakazaki, Takamitsu**
**2590-22 Oazaishitaki**
**Takahagi Ibaraki (JP)**
Inventor: **Kita, Hisanao**
**4-17-22 Suwa**
**Hitachi Ibaraki (JP)**
Inventor: **Akutsu, Yoji**
**1-5-3-403 Nishinarusawa**
**Hitachi Ibaraki (JP)**

(74) Representative: **Paget, Hugh Charles Edward et al,**
**MEWBURN ELLIS & CO. 2/3 Cursitor Street**
**London EC4A 1BQ (GB)**

Courier Press, Leamington Spa, England.

Electron beam welding method and apparatus therefor

This invention relates to apparatus for electron beam welding, wherein the electron beam is directed from an electron gun onto the material being welded through a magnetic shielding member having an end face close to the said material being welded.

In general, electron beam welding apparatus, includes an electron gun and a movable table disposed in a vacuum chamber. The electron gun emits an electron beam which is directed onto the location of the abutment between two pieces of metal which are to be joined, so that the metals are made molten and welded. When this method is used for the welding of dissimilar metals, there are difficulties in that the weld beam is deflected and the welds formed tend to include non-welded spots. This is because when welding dissimilar metals, there is created within the metals a hot junction and a cold junction and the resulting potential difference causes a flow of current. This electric current produces a stray magnetic field, with the result that the welding electron beam is deflected because of its interaction with the component of the stray magnetic field in the direction of the welding beam. If the electron beam is deflected in this way, the metal will be heated at some point away from the join which is to be welded. If the metal is thin, a small degree of deflection can be tolerated since the heat will be created at only a small distance from the abutment and can be conducted to the abutment. When the metal is thick, however, these welding faults pose a serious problem.

Hitherto, in order to prevent the electron beam from being deflected when dissimilar metals are welded, the welding apparatus has been provided with a magnetic shielding pipe made of a high-permeability magnetic material to shield the electron beam from magnetic fields outside the pipe and welding has been carried out by directing the electron beam through the magnetic shielding pipe. This kind of welding apparatus is shown in Figure 1 of Japanese Laid Open Patent Application No. 50—129445 (1975). In this apparatus, in order to prevent stray magnetic fields from reaching the electron beam inside the magnetic shielding pipe, it is necessary that a distance between the end of the pipe and the metals which are to be welded is small, for example, not more than about 10 mm.

However, we have now found that sputterings and metal vapor expelled from the weld are deposited on the end surface of the magnetic shielding pipe, the deposition gradually accumulating and finally contacting the weld, which may be raised above the surface of the metal to a height of about 4 mm, so that welding cannot be continued. It is therefore necessary to clean the end of the magnetic shielding pipe on which the deposition has accumulated, this requiring an interruption of, for example, 2 to 3 minutes in the welding of thin pieces of metal and 4 to 5 minutes in the welding of thick pieces. This interruption of welding produces a poor quality weld since craters are formed within the weld. Furthermore, the interruption increases the time needed for the welding operation.

German Offenlegungsschrift No. 2,211,597 discloses an apparatus for electron beam welding in which the beam passes between movable belts arranged perpendicularly to the beam. Deposits building up on the belts are removed from the proximity of the beam by movement of the belts.

German Offenlegungsschrift No. 2,214,159 discloses an apparatus for electron beam welding in which the beam passes between a pair of rollers, the axes of which are perpendicular to the beam. Deposits building up on the rollers are removed from the proximity of the beam by rotation of the rollers.

The present invention as claimed is intended to improve on these arrangements by providing apparatus which permits electron beam welding, particularly of dissimilar metals, without interruption over an extended period of time. It makes the halt in welding for removal of deposit unneccessary by providing for the removal of the accumulated deposit, repeatedly if necessary, during the course of the welding operation.

The main advantages of the invention are thus that a weld can be achieved in a shorter overall time and that a high quality weld can be produced in this way since the defects which arise when welding is repeatedly interrupted are eliminated.

Embodiments of the apparatus of the invention will now be described by way of example with reference to the accompanying drawings, wherein:—

Figure 1 is a front sectional view of an electron beam welding apparatus according to the invention;

Figure 2 is an enlarged view of part of Figure 1;

Figure 3 is a sectional view along the line III—III of Figure 2;

Figure 4 is a plan view of shutters used for the apparatus shown in Figures 1 and 2;

Figure 5 is an enlarged sectional view of part of the apparatus of Figure 1 during its operation;

Figure 6 is a front sectional view of a second embodiment of the apparatus according to the invention;

Figure 7 is a sectional view along the line VII—VII in Figure 6; and

Figure 8 is a sectional view showing part of the apparatus of Figure 1 during its operation.

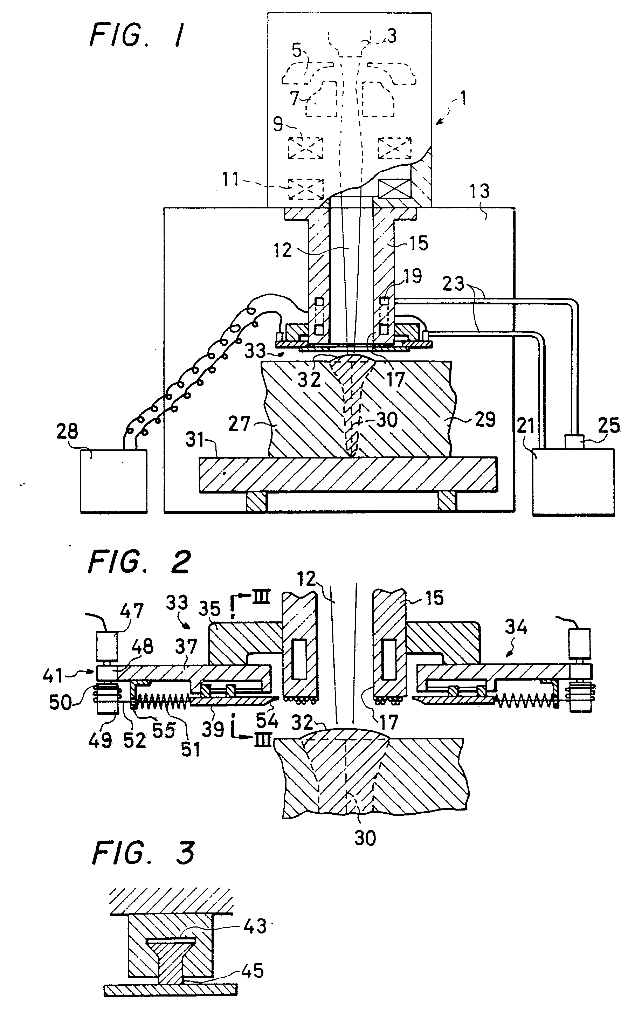

Figures 1 to 5 show the structure and operation of one embodiment of novel apparatus for performing the method of the invention.

As seen in Figure 1, an electron gun 1 which comprises a filament 3, a cathode 5, an anode 7, a focusing coil 9, and a deflection coil 11, is mounted onto a vacuum chamber 13 so that electron beams emitted from the filament are directed into the vacuum chamber 13. A magnetic shielding pipe 15 made of a magnetic material, for example, low carbon steel, is disposed in the vacuum chamber 13 and secured to the end of the electron gun 1. The magnetic shielding pipe 15 encloses electron beams 12 emitted from the gun so as to shield them from any stray magnetic fields. In the end portion 17 of the pipe 15, there is a cooling water passage 19 which is connected to a water tank 21 disposed outside the vacuum chamber 13 by means of water pipes 23, one of which is provided with a pump 25 for circulating cooling water through the passage 19.

The two pieces of metal 27, 29 which are to be welded and which may be, for example, dissimilar metals, are placed beneath the pipe 15. The pieces of metal 27, 29 are moved by a moving table 31 so that the abutment 30 of the two pieces of metal 27, 29 is aligned with the electron beam 12 emitted by the electron gun 1. The distance between the upper surfaces of the two pieces of metals and the lowermost surface of the pipe 15 is about 10 mm. When this distance is greater the electron beam is bent by stray magnetic fields in the space between the upper-surfaces of the pieces of metal 27, 29 and the end surface of the magnetic shielding pipe 15; a smaller distance results in rapid contact of the weld 32 with the metal deposits which accumulate on the lowermost surface of the pipe 15.

Referring to Figure 2, at the end 17 of the magnetic shielding pipe 15, there are provided a pair of cleaning devices 33, 34 for removing metal deposit accumulated on the lowermost surface of the pipe 15. The removing devices 33, 34 each comprise a holder 35 secured to the pipe 15, a base plate 37 secured to the holder 35, a shutter 39 which slides on the base plate 37, and drive means 41 mounted on the base plate 37 for driving the shutter 39. The base plate 37 includes a slideway 43 formed as shown in Figure 3, and in the slideway 43 two sliders 45 are slidably inserted. Each slider 45 is attached at its lower face to the shutter 39. The drive means 41 comprises a motor 47, a reduction gear 48 mounted on one end of the base plate 37, a drum 49 and a clutch 50 provided on the drum 49 to allow disconnection between the reduction gear 48 and the drum 49. An electric control unit 28 includes a power source. The drum 49 is driven by the motor 47 through the reduction gear 48 and the clutch 50. The drum 49 has wound on it a cord 52, one end of which is fixed to the drum 49, the other end being joined to the shutter 39. A spring 51 surrounding the cord 52 is compressed between one end of the shutter 39 and a stop 55 which is secured to the base plate 37.

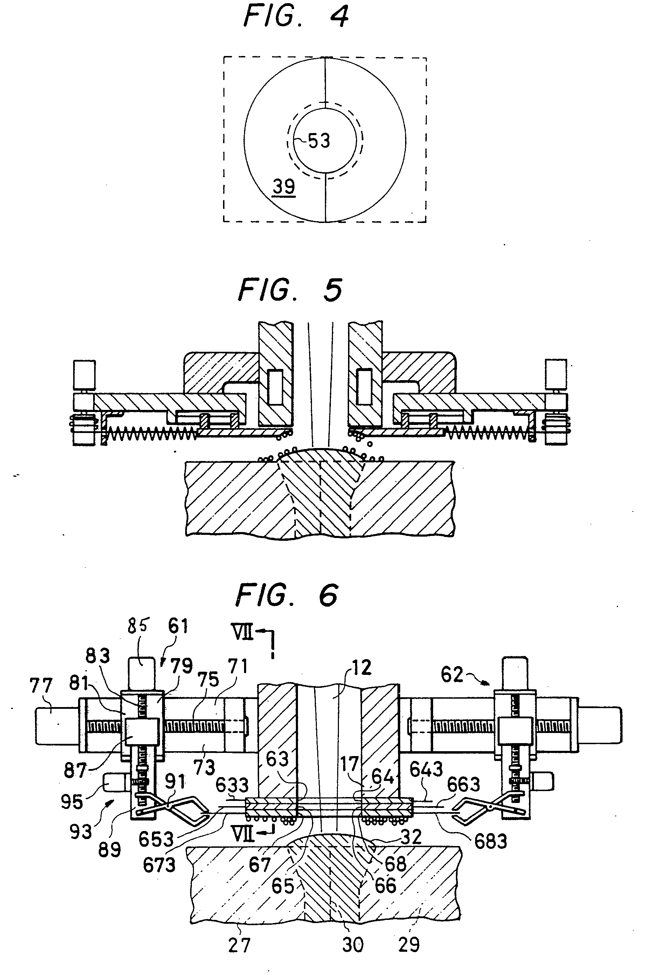

As shown in Fig. 4, the shutters 39 comprise a complementary pair of half-annuli having a hole 53 formed in the centre between them, the diameter of the hole 53 being substantially the same as the inner diameter of the magnetic shielding pipe 15. Each of the shutters 39 has a knife-edge 54 at its inner side that is along the edges which face the other shutter, and has, in this embodiment, a circularly shaped outer edge. The outer edge may be any other shape, for example, rectangular as shown by the broken line of Fig. 4.

In operation, the shutters 39 are pulled apart as the cord 52 is wound onto the drum 49 by the motor 47, whereby the spring 51 is compressed and energized. The electron beam is directed onto the abutting portion 30 of the pieces of dissimilar metal 27, 29. Operation of the pump 25 produces cooling of the lower end of the magnetic shielding pipe 15. As the electron beam welding proceeds and the weld 32 is formed sputtering and metal vapor from the weld 32 accumulates on the lowermost surface of the pipe 15. The metal vapor or the sputterings are not welded onto the pipe surface because it is cooled by the cooling water circulating through the end of the pipe.

When the metal deposit accumulated on the end surface of the magnetic shielding pipe 15 reaches a significant amount, the shutters 39 are closed. This is effected by operating the clutch 50 to disconnect the reduction gear 48 from the drum 49, allowing free rotation of the drum 49. The spring 51 then forces the shutters 39 across the lowermost surface of the pipe 15 as shown in Fig. 5. In this way, the metal deposit is cut off and removed from the end surface. The cut-off metal deposit drops onto and around the weld formed between the metals, but the quality of the weld is not affected since the metal is clean and does not include any impurities. It is therefore not necessary to provide means for recovering the cut-off metal deposit.

When the shutters 39 are closed, the hole 53 defined between them corresponds substantially with the aperture of the magnetic shielding pipe 15, as previously mentioned, so that the electron beam welding is unaffected by the operation of the shutters 39. Thus the metal deposit due to sputtering or metal vapor accumulated on the end surface of the magnetic shielding pipe 15 can be removed without interruption of the electron beam welding process. After the metal deposit on the end surface of the pipe 15 has been removed by closing the shutters 39, they are reopened by operating the drive means 41 so that they are ready to repeat the deposit removal.

In this embodiment, the shutters are closed by the action of the springs 51 which can produce a strong cutting action with only a small input from the driving motor, so that only a low powered drive means need be provided. Of course, any other suitable drive means may be used.

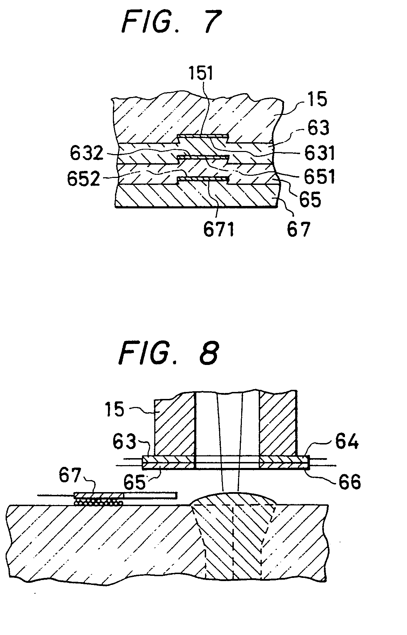

In Figures 6 to 8, another embodiment of the device for removing metal deposit accumulated on the end of the magnetic shielding pipe is shown. As shown in Figure 6, on the lower end 17 of the magnetic shielding pipe 15, there is provided a removing device which comprises a plurality of shutters, 63, 64, 65, 66, 67, 68 covering the lowermost surface of the magnetic shielding pipe 15 and a pair of drive means 61, 62 for driving the shutters 63 to 68. The shutters 63 to 68 are mounted adjacent the end surface of the pipe 15 as shown in Figure 7, which shows the construction of only one set of shutters namely 63, 65 and 67. The end portion of the pipe 15 is provided with a dovetail-shaped recess 151, the shutters 63, 65, 67 have dovetail-shaped projections 631, 651, 671 respectively and the upper and middle shutters 63, 65 have dovetail-shaped recesses 632, 652 respectively. The uppermost shutter 63 is slidably inserted in the recess 151 of the pipe 15 and the middle and the lowest shutters 65, 67 are inserted in the recesses 632, 652 of the uppermost and middle shutters 63, 65 respectively. The shutters 64, 66, 68 are constructed and mounted adjacent the pipe 15 in the same manner as the shutters 63, 65, 67. Each of the shutters 63 to 68 is of substantially the same shape except for the dovetail recesses and projections, and each pair of opposed shutters for example, shutters 63 and 64 forms an annulus when closed together. The shutters 63 to 68 each have pins 633, 643, 653, 673, 683 secured thereto, these pins 633 to 683 being graded in length, the uppermost one being the shortest and the lowest one the longest.

The drive means 61 is constructed as follows: As shown in Figure 6, a slide plate 71 is secured to the pipe 15. The slide plate 71 has a sliding face 73, and a screw shaft 75 opposite the sliding face 73. The screw shaft 75 is supported rotatably at both ends, and can be rotated by a first driven motor 77 secured to the slide plate 71. A first movable member 79 has a threaded hole through which the screw shaft 75 extends so that rotation of the screw shaft 75 causes the member 79 to move horizontally, sliding on the sliding face 73 of the slide plate 71. The first movable member 79 itself has a sliding face 81 and a screw shaft 83 opposite the sliding face 81. The screw shaft 83 is supported rotatably at both ends, and driven by a second driving motor 85 secured to the first movable member 79. A second movable member 87 has a threaded hole which the screw shaft 83 engages. On the second movable member 87, a supporting member 89 is mounted which carries a gripping device 91, comprising a pair of fingers for gripping the pins 633, 653, 673 of the shutters 63, 65, 67 and grip-driving means 93. The grip-driving means 93 comprises a drive motor 95 secured to the supporting member 89, and a worm gear driven by a worm which is itself driven by the motor 95 and which converts the rotation into vertical dis- placemen rack and pinion or other similar constructic may alternatively be used to interconvert the motion. The drive means 62 for operating the shutters 64, 66, 68 is constructed in the same way as the drive means 61.

In operation, before the electron beam 12 is directed onto the pieces of metal 27, 29, the end 17 of the magnetic shielding pipe 15 is covered by the closed shutters 63 to 68 and the welding is carried out as shown in Figure 6. When a metal deposit has accumulated on the lower shutters 67, 68, for example, immediately before the metal deposit is about to make contact with the weld 32, the motor 95 is actuated to cause the gripping devices 91 to grip the pins 673, 683 of the lower shutters 67, 68 pulling them out as shown in Figure 8, with the first movable member 79 on each side being horizontally displaced by rotation of the respective screw shaft 75. After the lower shutters 67, 68 have been withdrawn from beneath the end 17 of the pipe 15, the middle shutters 65, 66 are exposed to spatter or metal vapor as shown in Figure 8. The gripping devices 91 are repositioned by horizontal movement of the first movable members 79 and vertical movement of the second movable members 87 so that they can grip the pins 653, 663 of the middle shutters 65, 66. This shutter-withdrawing operation is repeated as the electron beam welding proceeds so that satisfactory welding can be effected without interruption. As Fig. 8 shows, the removed shutters may be placed on the pieces being welded, to be taken away with the pieces after welding. The shutters 63 to 68 (or another similar set) may be replaced before another welding operation begins.

## Claims

1. Apparatus for electron beam welding having an electron gun (1), a magnetic shielding member (15) mounted so as to shield electron beams (12) emitted from the electron gun (1) from stray magnetic fields, and means for removal, from the end face (17) of the magnetic shielding member remote from the gun, of metal deposits which accumulate on the end face during the course of welding; characterized in that: said removal means includes a pair of shutters (39) which are movable symmetrically and in opposite directions with respect to the axis of the electron beam and are operable without interruption of welding, and further includes drive means (47, 49) to open and close the shutters, closure of the shutter causing them to cut-off or dislodge metal deposits on the said end face (17) of the shielding member (15), the shutters (39) being shaped so as to provide, even when they are closed, an aperture (53) through which electron beams (12) emitted from the gun (1) may pass.

2. Apparatus for electron beam welding having an electron gun (1), a magnetic shielding member (15) mounted so as to shield electron beams (12) emitted from the electron gun (1) from stray magnetic fields, and means for removal, from the end face (17) of the magnetic shielding member remote from the gun, of metal deposits which accumulate on the end face during the course of welding; characterized in that: said removal means includes a plurality of removable elements (63—68) arranged in layer fashion for sequential removal and providing the end face of the shielding member (15) and further includes a pair of drive means (61, 62) to remove sequentially during the course of welding the said elements (63—68) on which metal deposits have accumulated and so expose fresh end surfaces of the shielding member (15).

3. Apparatus according to claim 1 or claim 2 wherein there is provided means (25) for cooling the end of the magnetic shielding member (15) remote from the gun.

## Revendications

1. Dispositif pour le soudage au moyen d'un faisceau d'électrons ayant un canon d'électrons (1), un organe de blindage magnétique (15) monté afin de protéger les faisceaux d'électrons (12) émis du canon d'électrons (1) de champs magnétiques parasites et un moyen pour enlever, de la face extrême (17) de l'organe de blindage magnétique qui est éloignée du canon, les dépôts de métal s'accumulant sur la face extrême pendant le cours du soudage, caractérisé en ce que: ledit moyen d'enlèvement comprend une paire d'obturateurs (39) qui sont mobiles symétriquement et en directions opposées par rapport à l'axe du faisceau d'électrons et ils peuvent fonctionner sans interruption du soudage, et il comprend de plus un moyen d'entraînement (47, 49) pour ouvrir et fermer les obturateurs, la fermeture des obturateurs les forçant à couper ou à déloger le dépôts de métal sur ladite face extrême (17) de l'organe de blindage (15), le obturateurs (39) étant configurés afin de produire, même quand ils sont fermés, une ouverture (53) par laquelle peuvent passer les faisceaux d'électrons (12) émis par le canon (1).

2. Dispositif pour le soudage au moyen d'un faisceau d'électrons ayant un canon d'électrons (1), un organe de blindage magnétique (15) monté afin de protéger les faisceaux d'électrons (12) émis par le canon d'électrons (1) de champs magnétiques parasites, et un moyen pour enlever, de la face extrême (17) de l'organe de blindage magnétique qui est éloignée du canon, les dépôts de métal s'accumulant sur la face extrême pendant le cours du soudage; caractérisé en ce que: ledit moyen d'enlèvement comprend un certain nombre d'éléments amovibles (63—68) agencés en couches pour l'enlévement séquential et formant la face extrême de l'organe de blindage (15), et comprend de plus une paire de moyens d'entraînement (61, 62) pour retirer séquentiellement pendant le cours du soudage lesdits éléments (63—68) où se sont accumulés des dépôts de métal et exposer ainsi des surfaces extrêmes fraîches dudit organe de blindage (15).

3. Dispositif selon la revendication 1 ou la revendication 2 dans lequel est prévu un moyen (25) pour refroidir l'extrémité de l'organe de blindage magnétique (15) qui est éloignée du canon.

## Patentansprüche

1. Vorrichtung zum Elektronenstrahlschweißen mit einer Elektronenkanone (1), einem im Sinne einer Abschirmung der von der Elektronenkanone (1) emittierten Elektronenstrahlen (12) gegen magnetische Streufelder angeordneten magnetischen Abschirmkörper (15) und einer Einrichtung zur Beseitigung sich auf der der Elektronenkanone abgewandten Endfläche (17) des magnetischen Abschirmkörpers im Laufe des Schweißens ansammelnder Ablagerungen von der Endfläche, dadurch gekennzeichnet, daß die Beseitigunseinrichtung ein Paar von Schiebern (39) aufweist, die symmetrisch und in zueinander entgegengesetzten Richtungen bezüglich der Achse des Elektronenstrahls bewegbar und ohne Unterbrechung des Schweißens betätigbar sind, und ferner eine Antriebseinrichtung (47, 49) zum Öffnen und Schließen der Schieber aufweist, wobei die Schieber durch ihr Schließen ein Abschneiden oder Wegschieben von Metallablagerungen auf dieser Endfläche (17) des Abschirmkörpers (15) verursachen, und die Schieber (39) derart ausgebildet sind, daß selbst in ihrem geschlossenen Zustand eine Öffnung (53) vorhanden est, durch die von der Kanone (1) emittierte Elektronenstrahlen (12) hindurchtreten können.

2. Vorrichtung zum Elektronenstrahlschweißen mit einer Elektronenkanone (1), einem im Sinne einer Abschirmung der von der Elektronenkanone (1) emittierten Elektronenstrahler (12) gegen magnetische Streufelder angeordneten magnetischen Abschirmkörper (15) und einer Einrichtung zur Beseitigung sich auf der der Elektronenkanone abgewandten Endfläche (17) des magnetischen Abschirmkörpers im Laufe des Schweißens ansammelnder Ablagerungen von der Endfläche, dadurch gekennzeichnet, daß die Beseitigungseinrichtung eine Anzahl von abnehmbaren Elementen (63—68) aufweist, die schichtartig zur sequentiellen Entfernung angeordnet sind und die Endfläche des Abschirmkörpers (15) bilden, und ferner ein Paar von Antriebseinrichtungen (61, 62) aufweist, um sequentiell im Laufe des Schweißens diese Elements (63—68), auf denen sich Metallablagerungen angesammelt haben, zu entfernen und so frische Endflächen des Abschirmkörpers (15) freizulegen.

3. Vorrichtung nach Anspruch 1 oder Anspruch 2, bei der eine Einrichtung (25) zum Kühlen des der Kanone abgewandten Endes des magnetischen Abschirmkörpers (15) vorgesehen ist.

FIG. 1

FIG. 2

FIG. 3

## FIG. 4

53

39

## FIG. 5

## FIG. 6

85 61 VII

83 79 75 71 12 62

77 81

87 73 63 17 64 643 663

95 91 633 32

93 653 VII 68 683

89 673 67 66

27 30 29

2

## FIG. 7

## FIG. 8